# EUROPEAN PATENT APPLICATION

(11) **EP 1 592 232 A1**
(43) Date of publication of application: **02.11.2005**
(21) Application number: 05101247.4
(22) Date of filing: 18.02.2005
(51) Int. Cl.: H04N 5/00, H04N 5/44, H04N 7/10

(54) **USB interface module for digital video broadcasting**

(30) Priority: 20.02.2004 US 545944
(71) Applicant: VBOX COMMUNICATIONS LTD., 46733 Herzliya (IL)
(72) Inventor: Turgeman, Shlomo, 52960 Ramat Efal (IL); Nevo, Moti, 48571 Rosh Ha ain (IL); Panich, Nachum, 52382 Ramat Gan (IL)
(74) Representative: Dennemeyer, John James

(57) **Abstract**

Apparatus and methods for providing a USB interface module for digital video broadcasting (DVB) with a personal computer (PC), characterized by a Network Interface Module integrated circuit component (NIM) in communication with a first controller through a control bus, the NIM being adapted to receive data that includes a DVB-compliant transport stream, and a USB2.0 interface controller in communication with the first controller and adapted to pass on the DVB-compliant transport stream unprocessed to a PC.

## Description

### FIELD OF THE INVENTION

The present invention relates generally to digital video broadcasting (DVB), and particularly to a USB interface module for DVB with a PC.

### BACKGROUND OF THE INVENTION

Digital video broadcasting (DVB) signals include the video and audio components of broadcast content, as well as other information. For example, a receiver of a digital transmission needs control data for its technical function, such as so-called "Packet_Identifiers" (PID) among others, so that when the Packaged Elementary Streams (PES) are demultiplexed from the received transportation stream, the compressed video or audio data contained therein can be functionally assigned. These control data are transmitted as "sections" in the so-called Program Specific Information (PSI), which may be expanded in accordance with the service provider's needs by means of additional sections, so-called "Private-Sections".

Modules exist in the prior art for receiving DVB signals, processing the audio and video content and transmitting the processed and decoded signals for viewing and listening on a personal computer (PC). These modules connect to the PC via a USB (universal serial bus) connector that plugs into the USB port of the PC. Prior art USB devices for DVB perform transport stream processing and transfer selected PIDs or data only to the host PC.

### SUMMARY OF THE INVENTION

The present invention seeks to provide a novel and improved a USB interface module for DVB with a PC, as is described more in detail hereinbelow.

### BRIEF DESCRIPTION OF THE DRAWINGS

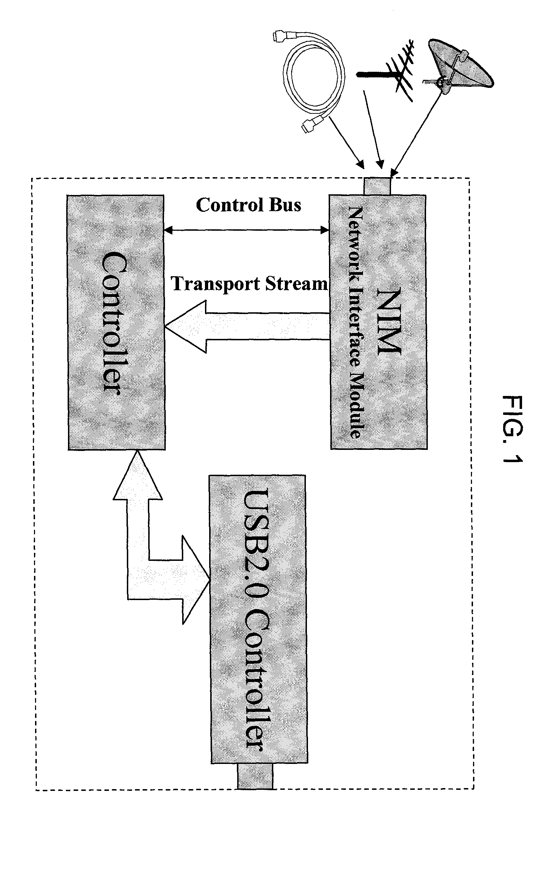

The present invention will be understood and appreciated more fully from the following detailed description taken in conjunction with the single drawing, Fig. 1, which is a simplified block diagram illustration of a USB interface module for DVB with a PC, in accordance with an embodiment of the present invention.

### DETAILED DESCRIPTION OF EMBODIMENTS

Reference is now made to the single drawing Fig. 1, which illustrates a USB interface module for DVB with a PC, in accordance with an embodiment of the present invention.

The module may include a Network Interface Module (NIM) integrated circuit component, such as but not limited to, a QPSK demodulation chip. The NIM may be in communication with a first controller through a control bus. The data received by the NIM may include, without limitation, a DVB-compliant transport stream that may be carried over satellite, cable, or terrestrial digital transmission systems or any other suitable communication system. The full transport stream may be received by the NIM and passed on to the PC via a USB2.0 interface controller, as controlled by the first controller.

It is important to note that the USB interface module of the present invention transfers the transport stream without any handling thereof (i.e., unprocessed) to the PC through the USB2.0 interface. Then the host PC software provides the transport stream handling, including without limitation, parsing, demultiplexing, PID (packet identifier) filtering, decoding, retransmitting to the LAN (local area network) and others. The data that may be extracted from the DVB may comprise, without limitation, IP (Internet protocol) data over DVB, such as but not limited to, bit-streams, byte-streams, headers of SI, MPEG files and packets, e-mail and many others.

Examples of PC software which may fully handle the transport stream include:
a. Microsoft Windows XP Media Center Edition (MCE), which includes tools for digital media, including Windows Media® Player 9 Series (for DVD playback, CD burning, exporting video to portable devices), Windows Movie Maker 2 (for capturing, editing, showing, and organizing movies)
b. Homemedianetworks software called the ShowShifter, including PC TV record and playback, browsing of TV listings and setting timed recordings, entertainment over a network, and digital photos for view on a PC monitor.

In the prior art, the USB module did the transport stream handling. A reason for this perhaps was the USB 1.1 bandwidth limitation - 12Mbits per second, which could not handle the required bandwidth for full transport stream, whose bandwidth may be up to 120 Mbits per second. However, the present invention uses a USB2.0 interface, whose bandwidth may be up to 400 Mbits per second, thereby enabling passing on the full transport stream without any handling thereof to the PC.

It will be appreciated by persons skilled in the art that the present invention is not limited by what has been particularly shown and described hereinabove. Rather the scope of the present invention includes both combinations and subcombinations of the features described hereinabove as well as modifications and variations thereof which would occur to a person of skill in the art upon reading the foregoing description and which are not in the prior art.

## Claims

1. Apparatus for providing a USB interface module for digital video broadcasting (DVB) with a personal computer (PC), **characterized by**:
a Network Interface Module integrated circuit component (NIM) in communication with a first controller through a control bus, said NIM being adapted to receive data that comprises a DVB-compliant transport stream; and
a USB2.0 interface controller in communication with said first controller and adapted to pass on said DVB-compliant transport stream unprocessed to a PC.

2. The apparatus according to claim 1, wherein said NIM comprises a QPSK demodulation chip.

3. The apparatus according to claim 1 or claim 2, wherein said DVB-compliant transport stream is carried over at least one of satellite, cable, and terrestrial digital transmission systems.

4. A method for providing DVB to a PC, **characterized by**:
providing a Network Interface Module integrated circuit component (NIM) in communication with a first controller through a control bus, said NIM being adapted to receive data that comprises a DVB-compliant transport stream;
providing a USB2.0 interface controller in communication with said first controller; and
passing on said DVB-compliant transport stream unprocessed to a PC.

5. The method according to claim 4, further comprising receiving said DVB-compliant transport stream from at least one of satellite, cable, and terrestrial digital transmission systems.

6. The method according to claim 4 or claim 5, further comprising processing said DVB-compliant transport stream in the PC.

7. The method according to claim 6, wherein said processing comprises at least one of parsing, demultiplexing, PID (packet identifier) filtering, decoding, and retransmitting to a LAN (local area network).
